# EUROPEAN PATENT APPLICATION

(11) **EP 1 197 789 A1**
(43) Date of publication of application: **17.04.2002**
(21) Application number: 00610109.1
(22) Date of filing: 17.10.2000
(51) Int. Cl.: G02F 1/13357

(54) **Edge-illuminated liquid-crystal display**

(71) Applicant: Telefonaktiebolaget L M Ericsson (Publ), 126 25 Stockholm (SE)
(72) Inventor: Heden, Erik, 226 43 Lund (SE); Ek, Martin, 240 10 Dalby (SE)
(74) Representative: Boesen, Johnny Peder

(57) **Abstract**

A liquid-crystal display (LCD) structure for an electronic device is described. The LCD structure comprises a front transparent plate (3) and a rear transparent plate (5) with a liquid-crystal material (4) and means for applying an electric field across said liquid-crystal material (4) therebetween and a first polarizer (2) positioned in front of said liquid-crystal material (4). The LCD structure is provided with a light source for providing a back light to the LCD. The light from the light source is applied to an edge of the rear transparent plate (5) such that the rear transparent plate (5) serves as a light-guiding plate that distributes the light across the back of the LCD.

## Description

### Technical field

The invention relates to a liquid-crystal display (LCD) structure for an electronic device, said LCD structure comprising a front transparent plate and a rear transparent plate with a liquid-crystal material and means for applying an electric field across said liquid-crystal material therebetween, and also comprising a first polarizer positioned in front of said liquid-crystal material, said LCD structure being provided with a light source for providing a back light to the LCD.

The invention also relates to a use of such an LCD structure in an electronic device.

### Related prior art

EP-A1-580,908 and US-A-5,808,708 each discloses a typical back light LCD structure comprising an LCD and a separate light-guiding plate positioned behind or underneath the LCD. The LCD may be a standard LCD comprising from the front side to the rear side thereof a first polarizer, a front transparent plate, a liquid-crystal material provided with means on each side thereof for applying an electric field across said liquid-crystal material for activating certain areas of the LCD, a rear transparent plate and a second polarizer. The LCD as such and the operation thereof is known in the art and will not be described in details.

Behind or underneath the LCD a light-guiding plate is provided and a light source, such as a light-emitting diode (LED) or a fluorescent tube, is provided near one edge of the light-guiding plate. The light-guiding plate is made of a material that is highly light-transmissive, e.g. a transparent acrylic resin. The light-guiding plate may further be provided with means, such as a dot pattern on its lower face, in order to distribute the light from the light source evenly across the rear side of the LCD. Other known means for achieving an even light distribution across the rear side of the LCD comprise formation of grooves in the light-guiding plate or providing the light-guiding plate with a wedge-shape.

In the prior art devices referred to above, a reflector is provided at the rear side of the light-guiding plate in order to reflect all incoming light to the LCD. It is, however, also known to provide a transflector, i.e. a reflector that is partly transparent, between the light-guiding plate and the LCD. The transflector reflects most of the light that is applied to the front of the LCD, but allows the back light to be transmitted therethrough.

### Object of the invention

In many electronic devices today, especially in small electronic devices, the volumes for components are very confined. There is therefore a demand for increasingly smaller components and this also applies to the LCD and the LCD structure. In the known LCD structures comprising a back light, the back light is provided as described above by providing a light-guiding plate behind or underneath the LCD. A typical small LCD, i.e. less than 5 cm across, has a thickness of 1.5-2 mm and a typical light-guiding plate has a thickness of 0.8-1.5 mm so that the total thickness of the LCD structure is about 2.3-3.5 mm. The light-guiding plate typically accounts for 40-50% of the total thickness of the LCD structure.

It is an object of the invention to provide an LCD structure that meets the general demand for small components and to provide an electronic device comprising such an LCD structure.

### Summary of the invention

The object of the invention is achieved by providing the LCD structure mentioned in the opening paragraph in such a way that the back light is applied to an edge of the rear transparent plate such that the rear transparent plate serves as a light-guiding plate that distributes the light across the back of the LCD.

Thereby a separate light-guiding plate is avoided and the total thickness of the LCD structure is significantly reduced.

The back light may be provided to the rear transparent plate of an ordinary LCD, but in order to achieve a high contrast between activated and deactivated areas of the LCD different changes could be made to the LCD.

In a first embodiment a second polarizer is positioned immediately above the rear transparent plate. This ensures that light in only one direction is led from the back light to the liquid-crystal material which means that there will be full contrast between activated and deactivated areas of the LCD when the back light is switched on.

If the LCD should be usable also without the back light switched on a reflector or a transflector must be provided underneath the liquid-crystal material. A transflector may be positioned immediately above the rear transparent plate or alternatively a reflector is positioned underneath the rear transparent plate.

If a transflector is positioned above the rear transparent plate it is possible to provide the rear transparent plate with means, such as unevenly spaced grooves or elevations, or shaping the rear transparent plate as a wedge in order to achieve an even light distribution throughout the plate without influencing the reflection of incoming light from the front of the LCD. By using a reflector underneath the rear transparent plate the LCD becomes totally reflective which is an advantage since this is normally readable at lower light levels than a transmissive LCD. However, any means provided in the rear transparent plate for evenly distributing the light deflects the reflected light and influences the appearance of the LCD. It should be mentioned that a reflective LCD is easier to manufacture than a transmissive one.

The front transparent plate as well as the rear transparent plate may be made of glass as is commonly known in the art. However, at least the rear transparent plate could be made of a plastics material, such as an acrylic resin, especially if it is provided with means for even distribution of light throughout the plate. Such means are much easier provided during moulding of a plate of a plastics material than in a plate of glass.

Preferably the light is emitted from at least one light-emitting diode (LED) and a light guide may be provided for guiding the light from the LED to the edge of the rear transparent plate.

It shall be emphasised that the term "comprise/comprising" when used in this specification is taken to specify the presence of stated features, integers, steps or components but does not preclude the presence or addition of one or more other features, integers, steps components or groups thereof. Further, it should be emphasised that any specific physical dimension given in this specification is only illustrative and not to be considered limiting.

### Description of the drawings

The invention will be described in detail in the following with reference to the drawings in which
Fig. 1 shows an LCD structure according to the prior art;
Fig. 2 shows an LCD structure according to a first embodiment of the invention;
Fig. 3 shows an LCD structure according to a second embodiment of the invention;
Fig. 4 shows an LCD structure according to a third embodiment of the invention;
Fig. 5 shows an LCD structure according to a fourth embodiment of the invention;
Fig. 6 shows an LCD structure according to a fifth embodiment of the invention;
Fig. 7 shows an LCD structure according to the second embodiment of the invention, but provided with a light guide.

### Detailed description of an embodiment of the invention

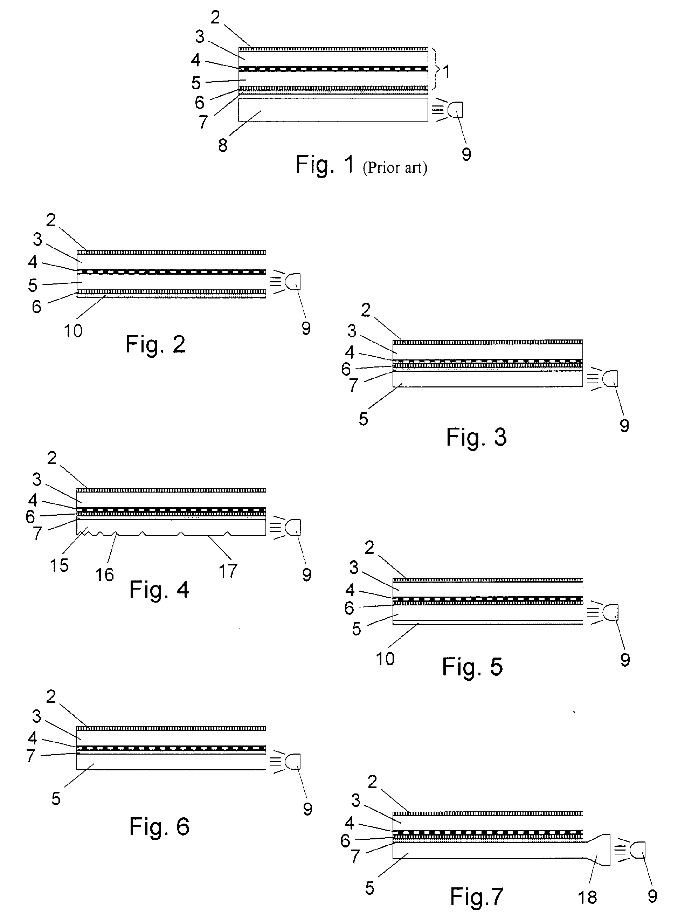

Fig. 1 shows a liquid-crystal display (LCD) structure according to the prior art. The LCD is generally designated 1 and is composed of the following layer from the front side (top of Fig. 1) to the rear side:
- a first polarizer 2 that polarizes light coming from the front of the LCD 1 in accordance with the polarization of the liquid-crystal material;
- a front transparent plate 3 that has no optical function, but simply is a structural part that imparts some rigidity to the LCD;
- a liquid-crystal material 4 provided with means for providing an electric field through the liquid-crystal material 4 and thereby activating/deactivating areas in the liquid-crystal material 4 in a known manner;
- a rear transparent plate 5 that also has no optical function, but simply is a structural part that imparts some rigidity to the LCD; and
- a second polarizer 6 that polarizes any back light.

This structure of the LCD 1 is commonly known and its functionality will not be described in detail in this specification.

At the rear side or underneath the LCD 1 a transflector 7 and a light-guiding plate 8 are provided and at one edge of the light-guiding plate 8 a light-emitting diode (LED) 9 is provided.

The transflector 7 has a double function since it reflects light from the front of the LCD 1 and thereby allows the LCD 1 to be read without any back light, and also allows any switched-on back light to be transmitted through it. The transflector 7 could be replaced by a non-transmissive reflector positioned underneath the light-guiding plate 8.

In the following, where reference will be made to various embodiments of an LCD structure according to the invention, similar parts of the LCD structure will be designated by the same reference numeral as in the prior art structure shown in Fig. 1 if these parts are or could be substantially identical. Only when a specific part that differs from a corresponding part in another embodiment is referred to, another reference numeral is employed.

Fig. 2 shows an LCD structure according to a first embodiment of the invention. The most distinct difference from the prior art LCD structure is that the light-guiding plate 8 (Fig. 1) is removed and that the rear transparent plate 5 is used as a light-guiding plate for the light emitted by the LED 9. It can immediately be seen that the omission of the light-guiding plate 8 significantly reduces the total thickness of the LCD structure.

The order of the elements in the LCD structure is maintained; however, since the back light is no longer to be transmitted through a transflector, this is replaced by a reflector 10. Thereby the LCD becomes fully reflective which is an advantage especially because a reflective LCD normally is readable at lower light levels than a transmissive one which means that the customer is not forced to use the back light as often as is the case with a transmissive LCD.

A disadvantage of this embodiment is, however, that some of the light emitted from the LED 9 is led to the liquid-crystal material 4 without being polarized. This means that the light has to be controlled to match the polarization of the liquid crystals and of the first polarizer 2 or, alternatively, to accept some contrast degradation due to the fact that stray light with an incorrect polarization will cause a washout effect.

A better solution is shown in Fig. 3 that shows an LCD structure according to a second embodiment of the invention. In this embodiment the second polarizer 6 and the transflector 7 are moved to a position immediately above the rear transparent plate 5. This means that the light emitted from the LED 9 is polarized correctly before it is led to the liquid-crystal material 4. This means that there is no contrast loss when switching on the back light.

Since the rear transparent plate 5 is positioned behind the transflector 7 it can be provided with means for evenly distributing the light from the LED 9 without these means being visible from the front of the LCD. This is shown in Fig. 4 that shows a third embodiment of the invention in which the LCD structure corresponds in principle to the LCD structure shown in Fig. 3. The rear transparent plate 15 is provided with grooves 16 that are unevenly distributed across the bottom face 17. The grooves are arranged in such a pattern that the light from the LED 9 is reflected substantially evenly across the rear transparent plate 15, thereby providing a uniform back light.

The uniform back light may be obtained in other manners, e.g. by providing a wedge-shaped rear transparent plate or by providing a diffuser above the rear transparent plate. These means are generally known within the art of back lighting an LCD.

Yet another embodiment for a back light LCD structure is shown in Fig. 5 that shows an LCD structure according to a fourth embodiment of the invention. In this embodiment the second polarizer 6 is positioned immediately above the rear transparent plate 5, thus the light from the LED 9 is correctly polarized. The transflector is once again replaced by a reflector 10 that is positioned underneath the rear transparent plate 5, thereby making the LCD fully reflective with the advantages described above with reference to Fig. 2. This structure has, however, also the disadvantage that any means for evenly distributing the light emitted from the LED 9 throughout the rear transparent plate 5 may be visible from the front of the LCD.

Fig. 6 shows an LCD structure according to a fifth embodiment of the invention in which the transflector 7 is positioned immediately above the rear transparent plate 5 and the second polarizer is avoided. This embodiment has the same disadvantage as the first embodiment shown in Fig. 2, i.e. some of the light emitted from the LED 9 is led to the liquid-crystal material 4 without being polarized. As mentioned above, this means that the light has to be controlled to match the polarization of the liquid crystals and of the first polarizer 2 or, alternatively, to accept some contrast degradation due to the fact that stray light with an incorrect polarization will cause a washout effect.

Finally, Fig. 7 shows an LCD structure according to the second embodiment of the invention shown in Fig. 3, but provided with a light guide 18 for guiding the light emitted from the LED 9 to the edge of the rear transparent plate 5. The light guide 18 is shown as a funnel-shaped element made of e.g. an acrylic resin and it is shaped so as to direct the light from the LED 9 to the edge of the rear transparent plate 5. The principle of a light guide is known within the art of back lighting an LCD and can have any form that suits a particular application.

The invention has been described with reference to a number of embodiments, some of which require changes in the order of the components from which the LCD is composed in relation to LCDs on the market today.

The use of the rear transparent plate as a light-guiding plate also requires that the edge adjacent the light source must be smooth so that the light is able to enter the rear transparent plate in a suitable manner for obtaining an evenly distributed light intensity.

In the embodiments shown all the components making up the LCD have the same length. It may, however, be necessary to extend the rear transparent plate in order to be able to successfully direct the light emitted from a light source to the edge thereof.

Other modifications are possible without departing from the general idea of the invention.

## Claims

1. A liquid-crystal display (LCD) structure for an electronic device, said LCD structure comprising a front transparent plate (3) and a rear transparent plate (5;15) with a liquid-crystal material (4) and means for applying an electric field across said liquid-crystal material (4) therebetween, and also comprising a first polarizer (2) positioned in front of said liquid-crystal material (4), said LCD structure being provided with a light source for providing a back light to the LCD, **characterised in that** the light from the light source is applied to an edge of the rear transparent plate (5;15) such that the rear transparent plate (5;15) serves as a light-guiding plate that distributes the light across the back of the LCD.

2. A liquid-crystal display structure according to claim 1, **characterised in that** a second polarizer (6) is positioned immediately above the rear transparent plate (5;15).

3. A liquid-crystal display structure according to claims 1 or 2, **characterised in that** a transflector (7) is positioned immediately above the rear transparent plate (5;15).

4. A liquid-crystal display structure according to claims 1 or 2, **characterised in that** a reflector (10) is positioned beneath the rear transparent plate (5).

5. A liquid-crystal display structure according to any one of claims 1-4, **characterised in that** the front transparent plate (3) and the rear transparent plate (5;15) are made of glass.

6. A liquid-crystal display structure according to any one of claims 1-4, **characterised in that** at least the rear transparent plate (5;15) is made of a plastics material, such as an acrylic resin.

7. A liquid-crystal display structure according to any one of claims 1-6, **characterised in that** the rear transparent plate (15) is provided with light distributing means that distribute the light evenly across the rear transparent plate (15).

8. A liquid-crystal display structure according to any one of claims 1-7, **characterised in that** the light source comprises at least one light emitting diode (9).

9. A liquid-crystal display structure according to any one of claims 1-8, **characterised in that** a light guide (18) is provided for guiding the light from the light source to the edge of the rear transparent plate (5).

10. Use of a liquid-crystal display structure according to any one of claims 1-9 in an electronic device, such as a mobile telephone.
